# FASCICULE DE BREVET EUROPEEN

(11) **EP 3 708 746 B1**
(45) Date de publication et mention de la délivrance du brevet: **05.01.2022**
(21) Numéro de dépôt: 20163175.1
(22) Date de dépôt: 13.03.2020
(51) Int. Cl.: E05B 63/06, F16C 7/06, E05C 19/14

(54) **DISPOSITIF DE VERROUILLAGE D'UNE TIGE FILETÉE DANS UN TUBE TARAUDÉ**
VERRIEGELUNGSVORRICHTUNG EINER GEWINDESTANGE IN EINEM GEWINDEROHR
DEVICE FOR LOCKING A THREADED ROD IN A TAPPED TUBE

(30) Priorité: 14.03.2019 FR 1902632
(43) Date de publication de la demande: 16.09.2020
(73) Titulaire: Lisi Aerospace, 75012 Paris (FR)
(72) Inventeur: ASTIER, Yannick, 18110 Allogny (FR); BELLAVIA, Bastien, 18120 Mereau (FR); HUMMEL, Boris, 18120 Quincy (FR)
(74) Mandataire: Lavoix

(56) Documents cités:
- FR-A5- 2 104 514
- FR-B1- 2 966 555
- US-A- 5 620 212
- US-A- 5 702 196

## Description

La présente invention concerne un dispositif de verrouillage, du type comportant : une tige sensiblement rectiligne, une première extrémité de ladite tige comportant un filetage ; un tube sensiblement rectiligne, une première extrémité ouverte dudit tube comportant un taraudage apte à coopérer avec le filetage de la tige dans une configuration engagée du dispositif, ledit tube et la tige étant ainsi déplaçables l'un par rapport à l'autre selon un axe principal ; la tige comprenant une rainure longitudinale ; une surface externe du tube, proche de la première extrémité, comprenant une première forme anti-rotation.

Un tel ensemble tige-tube est notamment utilisé dans une liaison mécanique de longueur ajustable, telle qu'une bielle. Dans une autre application, un tel ensemble tige-tube relie un crochet à un adaptateur de verrou, de manière analogue au verrou à crochet décrit dans le document FR2966555B1.

Afin de maintenir fixe la longueur de l'ensemble tige-tube, il est avantageux de munir un tel ensemble d'un dispositif de verrouillage, empêchant la tige et le tube de pivoter de manière intempestive l'un par rapport à l'autre.

La présente invention a pour but de proposer un dispositif de verrouillage apte à sécuriser les positions relatives de la tige et du tube, tout en permettant un déverrouillage facile pour modifier lesdites positions par vissage/dévissage.

A cet effet, l'invention a pour objet un dispositif de verrouillage du type précité, dans lequel : un manchon de verrouillage apte à être disposé autour de la tige dans ladite configuration engagée, une première extrémité dudit manchon comprenant un ergot interne apte à coulisser axialement dans la rainure longitudinale de ladite tige, une deuxième extrémité dudit manchon comprenant une deuxième forme anti-rotation apte à s'assembler avec la première forme anti-rotation, de sorte à bloquer en rotation le tube et le manchon par rapport à l'axe principal ; et un élément élastique relié au manchon de verrouillage, ledit manchon de verrouillage et ledit élément élastique étant mobiles entre une position de blocage, dans laquelle les première et deuxième formes anti-rotation sont assemblées ; et une position de déblocage, dans laquelle les première et deuxième formes anti-rotation sont écartées selon l'axe principal, le tube étant ainsi libre en rotation par rapport au manchon.

Suivant d'autres aspects avantageux de l'invention, le dispositif de verrouillage comporte l'une ou plusieurs des caractéristiques suivantes conformément aux revendications annexées :
- le dispositif de verrouillage est configuré de sorte que, dans la position de déblocage, l'élément élastique est dans un état de compression plus élevée que dans la position de blocage ;
- le manchon comprend une chambre interne s'étendant entre l'ergot interne et la deuxième forme anti-rotation ;
- le dispositif de verrouillage est configuré de sorte que, dans la position de déblocage, la première forme anti-rotation du tube est disposée dans la chambre interne du manchon ;
- l'élément élastique est un ressort de compression disposé dans la chambre interne, autour de la tige ;
- une première et une deuxième extrémités du ressort de compression sont en appui respectivement sur le manchon et sur la première extrémité du tube ;
- une extrémité de la rainure longitudinale, opposée à la première extrémité de la tige, est fermée de sorte à former une butée axiale ;
- les première et deuxième formes anti-rotation comprennent des méplats (40, 62) sensiblement parallèles à l'axe principal.

L'invention se rapporte en outre à un assemblage comprenant un dispositif de verrouillage tel que décrit ci-dessus.

Selon un premier mode de réalisation, l'assemblage est une bielle comprenant un organe d'accouplement de type embout de bielle, relié à une seconde extrémité de la tige.

Selon un deuxième mode de réalisation, l'assemblage est un verrou à crochet comprenant : un adaptateur relié à une seconde extrémité du tube ; et un crochet relié à une seconde extrémité de la tige.

L'invention sera mieux comprise à la lecture de la description qui va suivre, donnée uniquement à titre d'exemple non limitatif et faite en se référant aux dessins sur lesquels :
- [Fig 1] la figure 1 est une vue en perspective, en transparence partielle, d'un premier assemblage comprenant un dispositif de verrouillage selon un premier mode de réalisation de l'invention, dans une première position ;
- [Fig 2] la figure 2 est une vue en coupe du dispositif de la figure 1 dans la première position ;
- [Fig 3] [Fig 4] [Fig 5] les figures 3, 4 et 5 sont des vues en coupe du dispositif de la figure 1, respectivement dans une deuxième, dans une troisième et dans une quatrième positions ;
- [Fig 6] la figure 6 est une vue en coupe d'un élément du dispositif de la figure 1 ; et
- [Fig 7] la figure 7 est une vue latérale d'un deuxième assemblage comprenant un dispositif de verrouillage selon un deuxième mode de réalisation de l'invention.

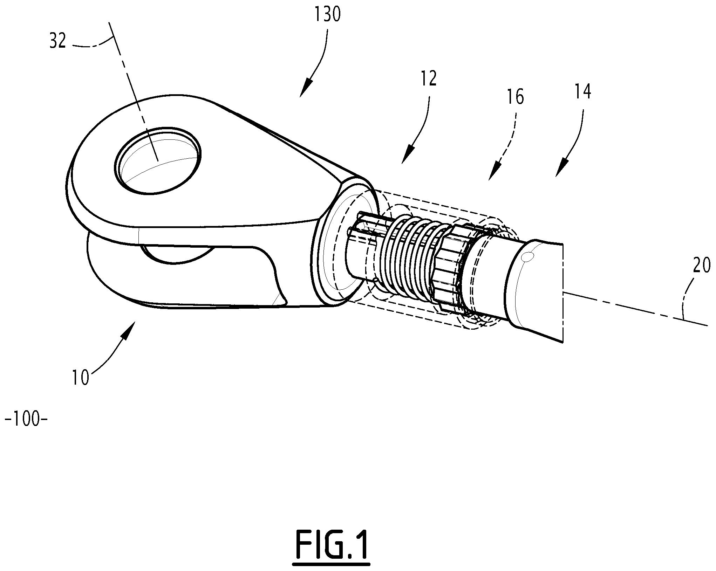

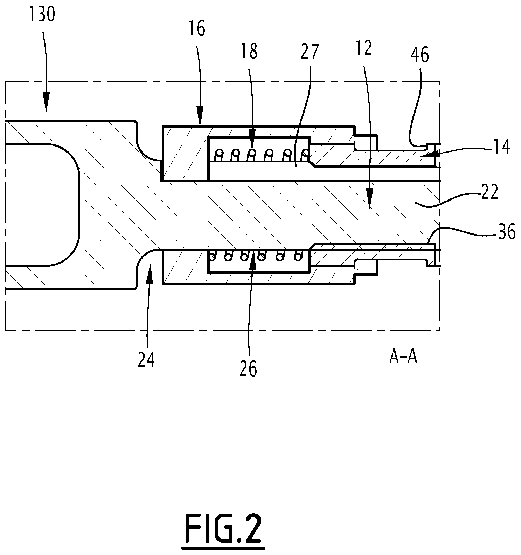

Les figures 1 à 5 et la figure 7 montrent un dispositif 10 de verrouillage selon un mode de réalisation de l'invention.

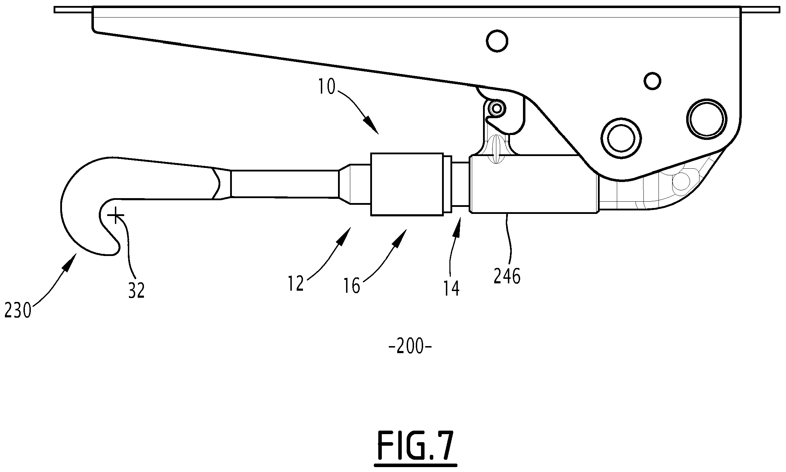

Dans le mode de réalisation des figures 1 à 5, le dispositif 10 de verrouillage fait partie d'un premier assemblage 100 de type bielle. Dans le mode de réalisation de la figure 7, le dispositif 10 de verrouillage fait partie d'un deuxième assemblage 200 de type verrou à crochet, analogue au verrou décrit dans le document FR2966555B1.

La description qui suit du dispositif 10 se rapporte aux premier 100 et deuxième 200 assemblages.

Le dispositif 10 de verrouillage comprend: une tige 12 ; un tube 14 ; un manchon de verrouillage 16 et un élément élastique 18.

La tige 12 a une forme sensiblement cylindrique de révolution, s'étendant selon un axe principal 20 entre une première 22 et une seconde 24 extrémités. Une surface radiale de la tige comporte un filetage 26 à proximité de la première extrémité 22.

La tige 12 comporte en outre une rainure longitudinale 27, ouverte sur la première extrémité 22 et s'étendant jusqu'à une autre extrémité fermée, formant une première butée axiale 28 proche de la seconde extrémité 24 de la tige.

Dans les modes de réalisation représentés aux figures 1 à 5 et 7, la seconde extrémité 24 de la tige est reliée à un organe d'accouplement 130, 230. Plus précisément, le premier assemblage 100 des figures 1 à 5 comprend un premier organe d'accouplement 130 tel qu'un embout de bielle. Le deuxième assemblage 200 de la figure 7 comprend un deuxième organe d'accouplement 230 tel qu' un crochet. L'organe d'accouplement 130, 230 définit par exemple un axe de rotation 32 sensiblement perpendiculaire à l'axe principal 20.

Le tube 14 s'étend de manière sensiblement rectiligne depuis une première extrémité 34 ouverte. A proximité de ladite première extrémité 34, une surface interne dudit tube comporte un taraudage 36 apte à coopérer avec le filetage 26.

Dans une configuration engagée du dispositif 10, telle que représentée sur les figures 1 à 5, la première extrémité 22 de la tige 12 est reçue dans le tube 14 et le filetage 26 est engagé sur le taraudage 36.

Une surface radiale externe du tube 14 comprend une forme anti-rotation 38, adjacente à la première extrémité 34. De préférence, la forme anti-rotation 38 comprend des méplats ou pans 40 sensiblement parallèles à l'axe principal 20. Dans le mode de réalisation représenté, la forme anti-rotation 38 comprend douze pans 40 identiques, mais il peut également s'agir d'une forme à six pans, à huit pans ou une forme multilobée, par exemple à six lobes.

Les méplats 40 de la forme anti-rotation 38 s'étendent axialement entre la première extrémité 34 du tube 14 et un bord 41, définissant une longueur 42.

Adjacente au bord 41 de la forme anti-rotation 38, la surface radiale externe du tube 14 comprend une zone de rotation 43 de forme cylindrique de révolution. La zone de rotation 43 présente un diamètre 44 inférieur ou égal à une dimension transversale minimale de la forme anti-rotation 38.

De préférence, la zone de rotation 43 s'étend jusqu'à une deuxième butée axiale 46 formée par une zone élargie de la surface radiale externe du tube 14, ladite zone élargie étant adjacente à la zone de rotation 43.

Dans le mode de réalisation des figures 1 à 5, une seconde extrémité (non représentée) du tube 14 est reliée à un embout de bielle. Dans le mode de réalisation de la figure 7, la seconde extrémité du tube 14 est fixée à un adaptateur 246 du verrou à crochet 200.

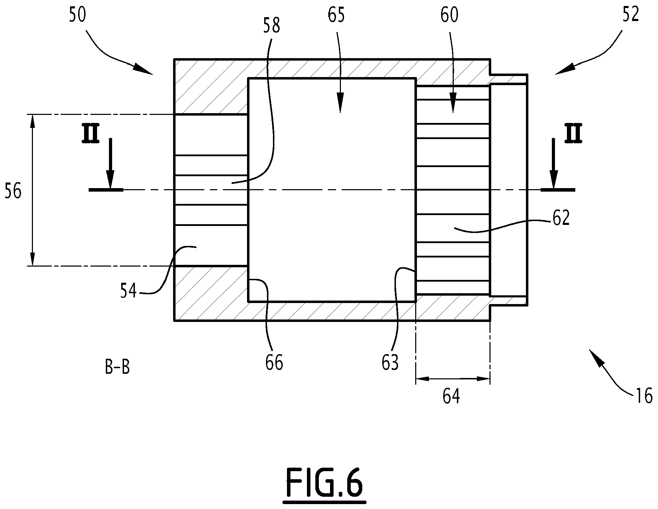

Le manchon de verrouillage 16, représenté seul à la figure 6, s'étend axialement entre une première 50 et une seconde 52 extrémités ouvertes. Dans le mode de réalisation représenté, une surface radiale externe du manchon 16 a une forme sensiblement cylindrique de révolution.

Le manchon de verrouillage 16 comporte une première paroi interne 54, sensiblement cylindrique de révolution, adjacente à la première extrémité 50. Un diamètre 56 de ladite première paroi interne 54 est légèrement supérieur à un diamètre maximal du filetage 26 de la tige 12.

Le manchon 16 comporte un ergot 58 formant saillie par rapport à la première paroi interne 54. Comme il sera détaillé par la suite, l'ergot 58 est configuré pour coulisser axialement dans la rainure longitudinale 27 de la tige 12.

Le manchon de verrouillage 16 comporte une deuxième paroi interne 60, adjacente à la seconde extrémité 52. La deuxième paroi interne 60 présente une forme sensiblement complémentaire de la forme anti-rotation 38 du tube 14. En particulier, la deuxième paroi interne 60 comporte des méplats 62 aptes à s'assembler aux méplats 40 du tube 14.

Les méplats 62 de la deuxième paroi interne 60 s'étendent axialement entre la seconde extrémité 52 du manchon 16 et un bord interne 63, définissant une longueur 64. Dans le mode de réalisation représenté, la longueur 64 des méplats 62 de la deuxième paroi interne 60 est sensiblement égale à la longueur 42 des méplats 40 de la forme anti-rotation 38.

Entre les première 54 et deuxième 60 parois internes, le manchon de verrouillage 16 comporte une chambre interne 65, sensiblement cylindrique de révolution. La chambre interne 65 présente un diamètre supérieur à celui de la première paroi interne 54 et comporte une extrémité annulaire 66, adjacente à ladite première paroi interne. Le diamètre de la chambre interne 65 est égal ou supérieur à une dimension transversale maximale de la forme anti-rotation 38.

Dans la configuration engagée, l'élément élastique 18 est disposé dans la chambre interne 65 du manchon de verrouillage 16. De préférence, l'élément élastique 18 est un ressort hélicoïdal de compression. Un diamètre interne des spires 68 dudit ressort 18 est supérieur au diamètre maximal du filetage 26 de la tige 12. Un diamètre externe desdites spires 68 est de préférence inférieur ou égal à la dimension transversale minimale de la forme anti-rotation 38.

Une longueur au repos du ressort 18 est supérieure à une longueur 70 de la chambre interne 65 du manchon 16. Dans le mode de réalisation représenté, ladite longueur au repos du ressort 18 est supérieure à la longueur 70 additionnée de la longueur 64 de la deuxième paroi interne 60.

Dans la configuration engagée des figures 1 à 5, le manchon de verrouillage 16 est disposé autour de la tige 12 et du tube 14, l'ergot 58 étant situé dans la rainure longitudinale 27. Le manchon 16 est ainsi bloqué en rotation et mobile en translation par rapport à la tige 12 selon l'axe principal 20.

Par ailleurs, dans ladite configuration engagée, le ressort 18 est disposé autour de la tige 12. Une première et une seconde extrémités axiales dudit ressort 18 sont en appui respectivement sur l'extrémité annulaire 66 de la chambre interne 65 et sur la première extrémité 34 du tube 14.

Les figures 1 et 2, la figure 3 et la figure 4 montrent le dispositif 10 du premier assemblage 100 respectivement dans une première, dans une deuxième et dans une troisième positions, dites de blocage. De même, la figure 7 montre le dispositif 10 du deuxième assemblage 200 dans la première position de blocage.

Dans chacune desdites première, deuxième et troisième positions de blocage, la première extrémité 34 du tube 14 est disposée à l'intérieur du manchon 16, la deuxième paroi interne 60 dudit manchon étant au contact de la forme anti-rotation 38 dudit tube. Plus précisément, chaque méplat 40 de la forme anti-rotation 38 est appliqué contre un méplat 62 correspondant de la deuxième paroi interne 60. Par l'intermédiaire de l'ergot 58, la tige 12 est ainsi bloquée en rotation par rapport au tube 14.

Par ailleurs, au niveau de la première extrémité 50 du manchon 16, l'ergot 58 vient en appui contre la première butée axiale 28 formée par la rainure longitudinale 27. Le ressort 18 est ainsi maintenu à l'intérieur du manchon 16.

Dans la première position des figures 1, 2 et 7, dite position intermédiaire de blocage, le tube 14 présente une première position axiale, dite intermédiaire, par rapport à la tige 12. Plus particulièrement, la première extrémité 34 du tube 14 est sensiblement en regard du bord interne 63 de la deuxième paroi interne 60 et le bord 41 des méplats 40 est sensiblement en regard de la seconde extrémité 52 du manchon 16. Le ressort 18 est dans un premier état intermédiaire de compression.

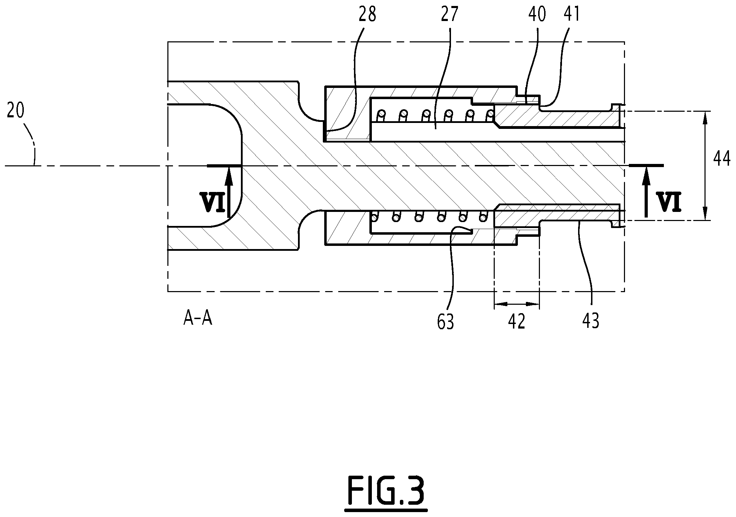

Dans la deuxième position de la figure 3, dite position étendue de blocage, le tube 14 présente une deuxième position axiale, dite étendue, par rapport à la tige 12. Plus particulièrement, la première extrémité 34 du tube 14 est disposée entre le bord interne 63 et la seconde extrémité 52 du manchon 16 ; et le bord 41 des méplats 40 est disposé à l'extérieur dudit manchon. Le ressort 18 est dans un deuxième état de compression plus faible que dans la position intermédiaire de blocage.

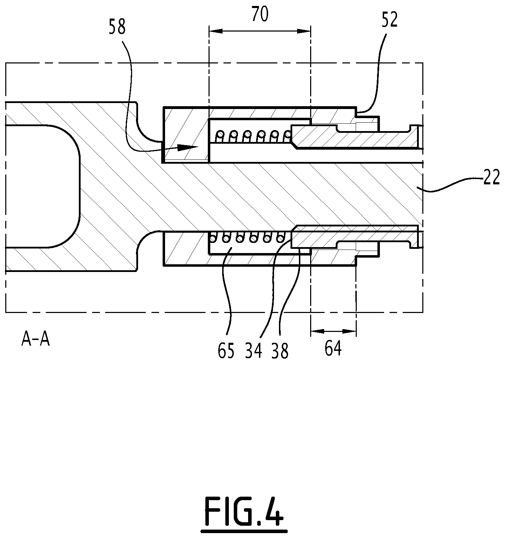

Dans la troisième position de la figure 4, dite position rétractée de blocage, le tube 14 présente une troisième position axiale, dite rétractée, par rapport à la tige 12. Plus particulièrement, la première extrémité 34 du tube 14 est disposée dans la chambre interne 65 et le bord 41 des méplats 40 est disposé entre le bord interne 63 et la seconde extrémité 52 du manchon 16. Le ressort 18 est dans un troisième état de compression plus élevée que dans la position intermédiaire de blocage.

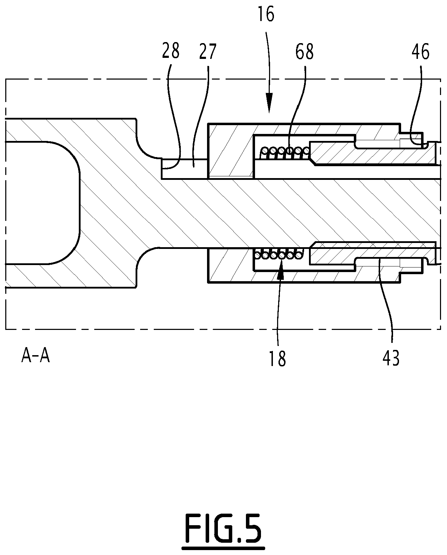

La figure 5 montre le dispositif 10 dans une quatrième position, dite de déblocage. Le manchon 16 est déplacé vers la deuxième butée axiale 46 du tube 14 et écarté de la première butée axiale 28 de la tige 12. La deuxième paroi interne 60 dudit manchon est ainsi axialement en vis-à-vis de la zone de rotation 43 du tube 14. Le manchon 16 est donc libre en rotation par rapport audit tube 14.

Par ailleurs, dans la position de déblocage, la totalité de la forme anti-rotation 38 dudit tube, y compris le bord 41, est reçue dans la chambre interne 65 du manchon 16. Les spires 68 sont rapprochées les unes des autres par rapport aux positions de blocage décrites ci-dessus ; le ressort 18 est ainsi dans un quatrième état de compression plus élevée que dans les première, deuxième et troisième positions de blocage.

Un procédé de montage du dispositif 10 du premier 100 ou du deuxième 200 assemblage va à présent être décrit. La tige 12 est assemblée au manchon 16 en insérant la première extrémité 22 de la tige dans la première extrémité 50 du manchon, l'ergot 58 étant positionné dans la rainure longitudinale 27. Le ressort 18 est ensuite enfilé autour de la tige 12 et inséré dans le manchon 16 par la seconde extrémité 52. Une extrémité du ressort 18 au repos étant en appui contre l'extrémité annulaire 66 du manchon 16, l'autre extrémité dudit ressort émerge de la seconde extrémité 52 dudit manchon.

La première extrémité 34 du tube 14 est ensuite vissée sur la première extrémité 22 de la tige 12 émergeant du manchon, puis ledit tube et ladite tige sont vissés l'un à l'autre jusqu'à ce que le ressort 18 soit légèrement comprimé entre ladite première extrémité 34 du tube et l'extrémité annulaire 66 du manchon 16, la première extrémité 50 dudit manchon étant en appui sur la première butée axiale 28 de la tige 12.

Le vissage est poursuivi jusqu'à une position angulaire du tube 14 par rapport à la tige 12, correspondant à un alignement des méplats 40 de la forme anti-rotation 38 avec les méplats 62 de la deuxième paroi interne 60 du manchon 16, les méplats étant décalés axialement selon l'axe principal 20.

Une contrainte axiale est alors exercée sur le manchon 16 de sorte à l'écarter de la première butée axiale 28, en direction de la deuxième butée axiale 46 du tube 14. La deuxième paroi interne 60 coulisse contre la forme anti-rotation 38 jusqu'à être en vis-à-vis de la zone de rotation 43, dans la position de déblocage de la figure 5.

Le vissage du tube 14 sur la tige 12 est ensuite poursuivi jusqu'à atteindre la position axiale relative souhaitée entre la tige et la vis, dans laquelle la position angulaire des méplats 40 du tube 14 correspondant à la position angulaire des méplats 62 de la vis. La contrainte axiale sur le manchon 16 est ensuite relâchée, le ressort 18 ramenant la première extrémité 50 dudit manchon en appui sur la première butée axiale 28.

Selon la position axiale du tube 14 par rapport à la tige 12, le dispositif 10 se trouve alors dans la position intermédiaire, étendue ou rétractée de blocage, représentée sur les figures 1-2, 3 ou 4 telles que décrites ci-dessus.

Afin de bloquer le tube 14 par rapport à la tige 12 dans une position axiale donnée, il suffit d'écarter à nouveau le manchon 16 de la première butée axiale 28 jusqu'à la position de déblocage, puis de visser ou de dévisser ledit tube 14 jusqu'à la position axiale souhaitée, et enfin de relâcher le manchon qui revient dans l'une des positions de blocage décrites ci-dessus.

Le nombre de positions de blocage possibles du tube 14 par rapport à la tige 12 dépend notamment des longueurs 42 et 64 respectives de la forme anti-rotation 38 et de la deuxième paroi interne 60, ainsi que du nombre de méplats 40, 62.

Selon une variante non représentée, un marquage visuel de type graduations est mis en place, par exemple sur une surface externe du tube 14, de manière à identifier la position de blocage correspondant à chaque réglage.

## Revendications

1. Dispositif (10) de verrouillage comprenant :
- une tige (12) sensiblement rectiligne, une première extrémité (22) de ladite tige comportant un filetage (26) ;
- un tube (14) sensiblement rectiligne, une première extrémité ouverte (34) dudit tube comportant un taraudage (36) apte à coopérer avec le filetage de la tige dans une configuration engagée du dispositif, ledit tube et la tige étant ainsi déplaçables l'un par rapport à l'autre selon un axe principal (20) ;
la tige comprenant une rainure longitudinale (27) ;
une surface externe du tube, proche de la première extrémité (34), comprenant une première forme anti-rotation (38, 40) ;
le dispositif de verrouillage étant **caractérisé en ce qu'**il comprend :
- un manchon (16) de verrouillage apte à être disposé autour de la tige dans ladite configuration engagée, une première extrémité (50) dudit manchon comprenant un ergot interne (58) apte à coulisser axialement dans la rainure longitudinale de ladite tige,
une deuxième extrémité (52) dudit manchon comprenant une deuxième forme anti-rotation (60, 62) apte à s'assembler avec la première forme anti-rotation, de sorte à bloquer en rotation le tube et le manchon par rapport à l'axe principal ; et
- un élément élastique (18) relié au manchon de verrouillage,
ledit manchon de verrouillage et ledit élément élastique étant mobiles entre une position de blocage, dans laquelle les première (38, 40) et deuxième (60, 62) formes anti-rotation sont assemblées ; et une position de déblocage, dans laquelle les première et deuxième formes anti-rotation sont écartées selon l'axe principal, le tube étant ainsi libre en rotation par rapport au manchon.

2. Dispositif de verrouillage selon la revendication 1, configuré de sorte que, dans la position de déblocage, l'élément élastique (18) est dans un état de compression plus élevée que dans la position de blocage.

3. Dispositif de verrouillage selon la revendication 1 ou la revendication 2, dans lequel le manchon (16) comprend une chambre interne (65) s'étendant entre l'ergot interne et la deuxième forme anti-rotation.

4. Dispositif de verrouillage selon la revendication 3, configuré de sorte que, dans la position de déblocage, la première forme anti-rotation (38, 40) du tube est disposée dans la chambre interne (65) du manchon.

5. Dispositif de verrouillage selon la revendication 3 ou la revendication 4, dans lequel l'élément élastique (18) est un ressort de compression disposé dans la chambre interne, autour de la tige.

6. Dispositif de verrouillage selon la revendication 5, dans lequel une première et une deuxième extrémités du ressort de compression (18) sont en appui respectivement sur le manchon (16, 66) et sur la première extrémité (34) du tube.

7. Dispositif de verrouillage selon l'une des revendications précédentes, dans lequel une extrémité de la rainure longitudinale (27), opposée à la première extrémité de la tige, est fermée de sorte à former une butée axiale (28).

8. Dispositif de verrouillage selon l'une des revendications précédentes, dans lequel les première (38) et deuxième (60) formes anti-rotation comprennent des méplats (40, 62) sensiblement parallèles à l'axe principal.

9. Bielle (100) comprenant un dispositif de verrouillage (10) selon l'une des revendications précédentes, ladite bielle comprenant en outre un organe d'accouplement (130) de type embout de bielle, relié à une seconde extrémité (24) de la tige.

10. Verrou à crochet (200) comprenant :
- un dispositif de verrouillage (10) selon l'une des revendications 1 à 8 ;
- un adaptateur (246) relié à une seconde extrémité du tube (12) ; et
- un crochet (230) relié à une seconde extrémité (24) de la tige.

## Patentansprüche

1. Verriegelungsvorrichtung (10), umfassend:
- eine etwa gerade Stange (12), wobei ein erstes Ende (22) der Stange ein Außengewinde (26) aufweist;
- ein etwa gerades Rohr (14), wobei ein offenes erstes Ende (34) des Rohrs ein Innengewinde (36) aufweist, das imstande ist, mit dem Außengewinde der Stange in einer eingeführten Konfiguration der Vorrichtung zusammenzuwirken, wobei das Rohr und die Stange somit gemäß einer Hauptachse (20) im Verhältnis zueinander verlagerbar sind;
wobei die Stange eine Längsrille (27) umfasst;
wobei eine äußere Oberfläche des Rohrs nahe dem ersten Ende (34) eine erste Antirotationsform umfasst (38, 40);
wobei die Verriegelungsvorrichtung **dadurch gekennzeichnet ist, dass** sie umfasst:
- eine Verriegelungshülse (16), die imstande ist, in der eingeführten Konfiguration um die Stange angeordnet zu sein, wobei ein erstes Ende (50) der Hülse einen inneren Sporn (58) umfasst, der imstande ist, in der Längsrille der Stange axial zu gleiten,
wobei ein zweites Ende (52) der Hülse eine zweite Antirotationsform (60, 62) umfasst, die imstande ist, sich mit der ersten Antirotationsform derart zu verbinden, dass das Rohr und die Hülse im Verhältnis zur Hauptachse rotatorisch arretiert sind; und
- ein elastisches Element (18), das mit der Verriegelungshülse verbunden ist,
wobei die Verriegelungshülse und das elastische Element zwischen einer Arretierungsposition, in welcher die erste (38, 40) und zweite (60, 62) Antirotationsform verbunden sind; und einer Löseposition, in welche die erste und zweite Antirotationsform gemäß der Hauptachse beabstandet sind, beweglich sind, wobei das Rohr damit im Verhältnis zur Hülse rotatorisch frei ist.

2. Verriegelungsvorrichtung nach Anspruch 1, die derart ausgelegt ist, dass das elastische Element (18) in der Löseposition in einem höheren Kompressionszustand als in der Arretierungsposition ist.

3. Verriegelungsvorrichtung nach Anspruch 1 oder Anspruch 2, wobei die Hülse (16) eine innere Kammer (65) umfasst, die sich zwischen dem inneren Sporn und der zweiten Antirotationsform erstreckt.

4. Verriegelungsvorrichtung nach Anspruch 3, die derart ausgelegt ist, dass die erste Antirotationsform (38, 40) des Rohrs in der Löseposition in der inneren Kammer (65) der Hülse angeordnet ist.

5. Verriegelungsvorrichtung nach Anspruch 3 oder Anspruch 4, wobei das elastische Element (18) eine Kompressionsfeder ist, die in der inneren Kammer um die Stange angeordnet ist.

6. Verriegelungsvorrichtung nach Anspruch 5, wobei sich ein erstes und ein zweites Ende der Kompressionsfeder (18) jeweils auf der Hülse (16, 66) und auf dem ersten Ende (34) des Rohrs abstützen.

7. Verriegelungsvorrichtung nach einem der vorangehenden Ansprüche, wobei ein Ende der Längsrille (27) gegenüber dem ersten Ende der Stange derart geschlossen ist, dass ein axialer Anschlag (28) gebildet wird.

8. Verriegelungsvorrichtung nach einem der vorangehenden Ansprüche, wobei die erste (38) und zweite (60) Antirotationsform Abflachungen (40, 62) umfassen, die etwa parallel zur Hauptachse sind.

9. Pleuelstange (100), umfassend eine Verriegelungsvorrichtung (10) nach einem der vorangehenden Ansprüche, wobei die Pleuelstange ferner ein Kopplungsorgan (130) vom Typ Pleuelstangenansatz umfasst, der mit einem zweiten Ende (24) der Stange verbunden ist.

10. Riegel mit Haken (200), umfassend:
- eine Verriegelungsvorrichtung (10) nach einem der Ansprüche 1 bis 8;
- einen Adapter (246), der mit einem zweiten Ende des Rohrs (12) verbunden ist; und
- einen Haken (230), der mit einem zweiten Ende (24) der Stange verbunden ist.

## Claims

1. A locking device (10) comprising:
- a substantially rectilinear rod (12), a first end (22) of said rod comprising a thread (26);
- a substantially rectilinear tube (14), a first open end (34) of said tube comprising a tapping (36) that is capable of cooperating with the thread of the rod in an engaged configuration of the device, said tube and the rod thus being movable relative to one another along a main axis (20);
the rod comprising a longitudinal groove (27);
an outer surface of the tube, close to the first end (34), comprising a first anti-rotation form (38, 40);
the locking device being **characterized in that** it comprises:
- a locking sleeve (16) capable of being positioned around the rod in said engaged configuration, a first end (50) of said sleeve comprising an inner lug (58) that is capable of sliding axially in the longitudinal groove of said rod,
a second end (52) of said sleeve comprising a second anti-rotation form (60, 62) that is capable of being assembled with the first anti-rotation form, so as to prevent the rotation of the tube and the sleeve relative to the main axis; and
- an elastic element (18) connected to the locking sleeve,
said locking sleeve and said elastic element being movable between a locked position, in which the first (38, 40) and second anti-rotation forms (60, 62) are assembled; and a release position, in which the first and second anti-rotation forms are spaced apart along the main axis, the tube thus being free to rotate relative to the sleeve.

2. The locking device according to claim 1, configured such that, in the release position, the elastic element (18) is in a higher state of compression than in the locked position.

3. The locking device according to claim 1 or claim 2, wherein the sleeve (16) comprises an inner chamber (65) extending between the inner lug and the second anti-rotation form.

4. The locking device according to claim 3, configured such that, in the release position, the first anti-rotation form (38, 40) of the tube is positioned in the inner chamber (65) of the sleeve.

5. The locking device according to claim 3 or claim 4, wherein the elastic element (18) is a compression spring positioned in the inner chamber, around the rod.

6. The locking device according to claim 5, wherein a first and a second end of the compression spring (18) are in abutment respectively against the sleeve (16, 66) and the first end (34) of the tube.

7. The locking device according to one of the preceding claims, wherein one end of the longitudinal groove (27), opposite the first end of the rod, is closed so as to form an axial stop (28).

8. The locking device according to one of the preceding claims, wherein the first (38) and second (60) anti-rotation forms comprise flats (40, 62) substantially parallel to the main axis.

9. A connecting rod (100) comprising a locking device (10) according to one of the preceding claims, said connecting rod further comprising a coupling member (130) of the connecting rod end type, connected to a second end (24) of the rod.

10. A hook latch (200), comprising:
- a locking device (10) according to one of claims 1 to 8;
- an adapter (246) connected to a second end of the tube (12); and
- a hook (230) connected to a second end (24) of the rod.
